# EUROPÄISCHE PATENTANMELDUNG

(11) **EP 1 584 579 A2**
(43) Veröffentlichungstag der Anmeldung: **12.10.2005**
(21) Anmeldenummer: 05006491.4
(22) Anmeldetag: 24.03.2005
(51) Int. Cl.: B65G 11/02

(54) **Vorrichtung zum Überführen von aufrecht angeordneten Spritzen in Verpackungsmaterial**

(30) Priorität: 05.04.2004 DE 102004017228
(71) Anmelder: UHLMANN PAC-SYSTEME GmbH & Co. KG, 88471 Laupheim (DE)
(72) Erfinder: Florczak, Werner, 88433 Schemmerhofen (DE); Schäffer, Johann, 88471 Laupheim (DE); Amann, Sandra, 88471 Laupheim (DE); Gnann, Kurt, 88427 Bad Schussenried (DE); Habdank, Markus, 88471 Laupheim (DE); Mayer, Hubert, 88410 Bad Wurzach (DE)
(74) Vertreter: Hentrich, Swen

(57) **Zusammenfassung**

Die Erfindung betrifft eine Vorrichtung zum Überführen von aufrecht angeordneten Gegenständen, wie Spritzen (2), mit einem einen Kragen (3) aufweisenden Körper (4) in Verpackungsmaterial. Bei der Vorrichtung ist eine Schrägführung mit zwei Leisten (5) vorgesehen ist, deren Abstand kleiner als die Quererstreckung des Kragens (3) und größer als die Quererstreckung des Körpers (4) ist, wobei in Transportrichtung der Spritzen (2) den Leisten (5) nachgeordnet ein Bogenteil (6) mit zwei Bogenleisten (7) angeordnet ist mit einem im wesentlichen vertikal orientierten Aufnahmespalt und einem im wesentlichen horizontal orientierten Abgabespalt, der über eine Aufnahme (10) mündet. Die Leisten (5) und die Bogenleisten (7) weisen auf den einander zugewandten Seiten parallel zu der oberen Leistenkante verlaufende Führungsschlitze (9) auf für die Aufnahme der Kragen (3) der Körper (4).

## Beschreibung

Die Erfindung betrifft eine vorrichtung zum Überführen von aufrecht angeordneten Spritzen, Flaschen oder gleichartigen Gegenstände mit einem einen Kragen aufweisenden Körper in Verpackungsmaterial, insbesondere in eine geformte Folie, bei der eine Schrägführung mit zwei Leisten vorgesehen ist, deren Abstand kleiner als die Quererstreckung des Kragens und größer als die Quererstreckung des Körpers ist, wobei in Transportrichtung der Spritzen, Flaschen oder dergl. den Leisten nachgeordnet ein Bogenteil mit zwei Bogenleisten angeordnet ist mit einem im wesentlichen vertikal orientierten Aufnahmespalt und einem im wesentlichen horizontal orientierten Abgabespalt, der über eine Aufnahme mündet.

Aus dem Stand der Technik ist es bisher bekannt, wie beispielsweise in der EP 1 125 870 A1 beschrieben, zylinderförmige Röhrchen unter der Wirkung der Schwerkraft liegend durch einen zunächst geneigten, dann senkrecht abfallenden Schacht in die Aufnahmen eines Transportbandes gleiten zu lassen. Diese Methode ist mit der gewünschten Leistungsfähigkeit hinsichtlich der Förderleistung aber nicht auf beliebig geformte längliche Körper übertragbar, da beispielsweise im Querschnitt rechteckige Körper innerhalb des Schachtes verkanten können, insbesondere bei dem Übergang von dem geneigten zu dem vertikalen verlauf des Schachtes. Bei Spritzen tritt das zusätzliche Problem hinzu, daß diese in der Regel einen Kragen am oberen Ende des Körpers aufweisen als Widerlager für die Lagesicherung des Körpers bei der Druckbeaufschlagung des Spritzenstempels, so daß der Kragen die Führung durch den Schacht verhindert.

Aus der DE 31 51 088 Al ist eine Vorrichtung zum Montieren von Werkstücken, insbesondere der Komplettierung von Spritzenkörpern mit Spritzenkolben bekannt. Diese Vorrichtung umfaßt eine Schrägführung mit zwei Leisten, auf denen die Kragen der Spritzenkörper angeordnet werden, die unter der Wirkung der Hangabtriebskraft einem Bogenteil zugeführt werden, in das eine vereinzelungswalze integriert ist, um die mit überlappenden Kragen heran geförderten Spritzenkörper zu vereinzeln und vereinzelt abzugeben. Die zwingende Notwendigkeit der Vereinzelungswalze führt zu einer konstruktiv aufwändigen Vorrichtung mit zergliedertem Bogenteil, die zudem störanfälliger ist, da es zu Blockaden der Vereinzelungswalze kommen kann, wenn beispielsweise zwei Spritzenkörper in eine in der vereinzelungswalze vorgesehene Aufnahme drängen.

Der Erfindung liegt die Aufgabe zugrunde, eine Vorrichtung der eingangs genannten Art so auszubilden, daß mit vereinfachten Mitteln eine hohe Betriebssicherheit erreicht werden kann.

Diese Aufgabe wird nach der Erfindung dadurch gelöst, daß die Leisten und/oder die Bogenleisten auf den einander zugewandten Seiten parallel zu der oberen Leistenkante verlaufende Führungsschlitze aufweisen für die Aufnahme der Kragen der Körper.

Mit dieser Gestaltung ist der Vorteil verbunden, daß die Spritzen oder andere Gegenstände hängend der Vorrichtung zugeführt und in dieser wiederum hängend unter der Wirkung der Schwerkraft auf den Leisten, nämlich in den Führungsschlitzen, entlang gleiten können; der Kragen des Körpers wird dabei zur Führung ausgenutzt. Die Überführung der Spritzen in eine liegende Orientierung erfolgt mittels des Bogenteils gleichmäßig unter stetiger Ausnutzung der Führung der Spritzen mittels des Kragens. Der Führungsschlitz stellt dabei eine bestimmte Orientierung des Spritzenkörpers zwischen den Leisten sicher und verhindert durch die obere Nutwandung, daß benachbarte Kragen sich überlappen können. Die Gegenstände können in Abhängigkeit von ihrer Querschnittsgestalt ohne Produktionsstörungen zwischen den Leisten gefördert werden, da deren Kragen in die Führungsschlitze eingeführt werden kann und für eine translatorische Fortbewegung sorgt, ohne daß durch Drehungen um die Längsachse des Körper dessen Quererstreckung sich vergrößert.

Bevorzugt ist weiterhin, daß die Aufnahme ein umlaufendes Band mit Rastplätzen für die von dem Abgabespalt an die Aufnahme abgegebenen Spritzen, Flaschen oder dergl. umfaßt, da so mit sehr hoher Förderleistung die Gegenstände von dem Bogenteil abgezogen und der Verpackung zugeführt werden können.

Zur verläßlichen Sicherung der Lage der Gegenstände auf dem umlaufenden Band ist vorgesehen, daß die Rastplätze im Querschnitt prismenförmig gestaltet sind zur Realisierung des umlaufenden Bandes als Prismenband.

Die Überführung der Gegenstände wie die Spritzen von dem umlaufenden Band in die Verpackung wird dabei dadurch bewirkt, daß dem Band ein Handhabungssystem zum Umsetzen der Spritzen, Flaschen in eine geformte Folie zugeordnet ist.

Alternativ besteht auch die Möglichkeit, daß die Aufnahme durch ein geformtes Folienband gebildet ist, also die unmittelbare Üergabe der Gegenstände aus dem Bogenteil in die Verpackung erfolgt.

Der Transport der Gegenstände auf den Leisten wird dadurch erleichtert, daß den Leisten eine vibrationseinheit zugeordnet ist, um so die Wirkung der Schwerkraft zu unterstützen und mittels Vibrationen eine permanente Unruhe der Gegenstände auf den Leisten zu erzeugen zur Verminderung der Reibung.

Ein Formatwechsel bei der erfindungsgemäßen Vorrichtung läßt sich zur Anpassung an unterschiedliche Gegenstände einfach dadurch erreichen, daß der Abstand der beiden Leisten und der Bogenleisten einstellbar ist, also Leisten und Bogenleisten in einem an die Spritzen angepaßten Abstand bereitgestellt werden können. Zu beachten ist dabei, daß eine Anpassung nur an die Quererstreckung der Gegenstände, also beispielsweise an den Durchmesser bei runden Körpern, erfolgen muß, da durch die hängende Transportweise nach unten ausreichend Platz bereitgestellt werden kann für die Verarbeitung des längsten Gegenstandes, was weder die Förderleistung noch die Zuverlässigkeit beeinträchtigt.

Im folgenden wird die Erfindung an einem in der Zeichnung dargestellten Ausführungsbeispiel näher erläutert; es zeigen:

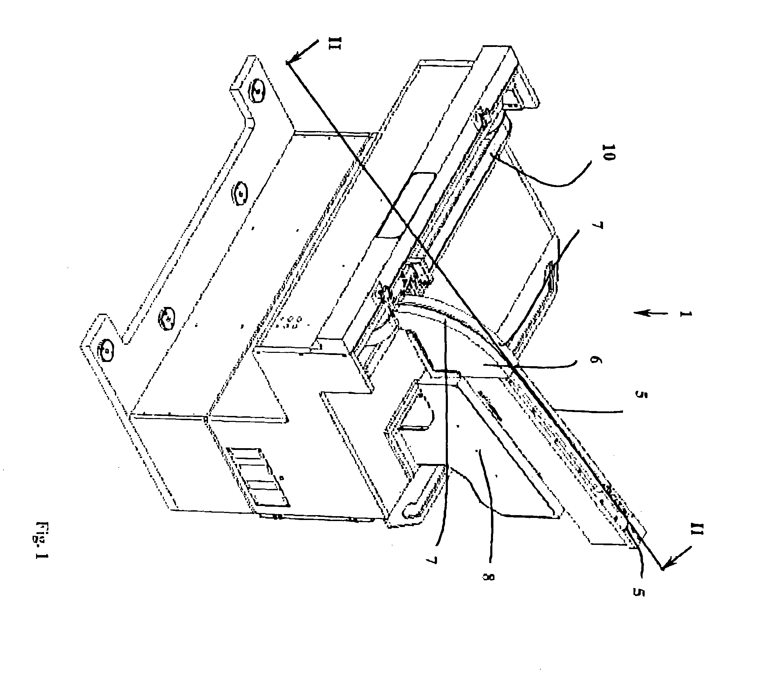

- Fig. 1: eine perspektivische Darstellung der erfindungsgemäßen Vorrichtung,

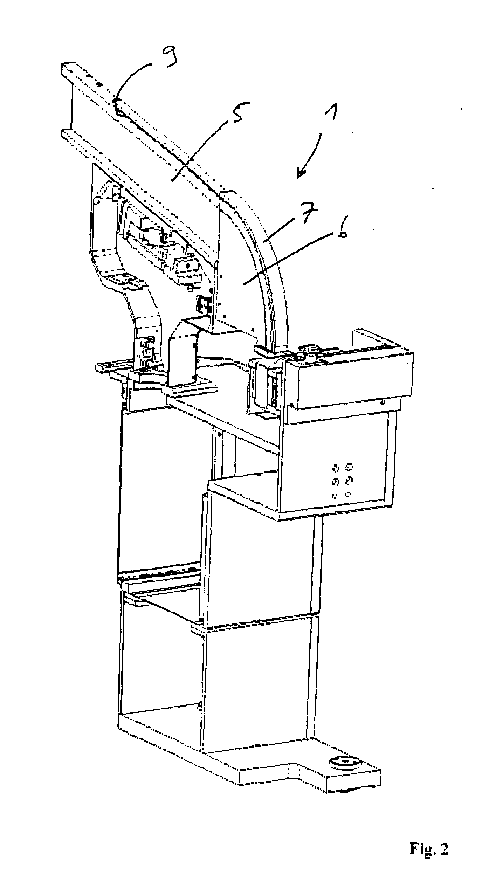

- Fig. 2: den Schnitt II-II aus Figur 1,
- Fig. 3: die Detaildarstellung einer mit ihrem Kragen in dem Führungsschlitz geführten Spritze,
- Fig. 4: eine der Figur 3 entsprechende Darstellung der geführten Spritze in dem Bogenteil, und
- Fig. 5: eine Seitenansicht des Prismenbandes.

In der Zeichnung ist eine Vorrichtung gezeigt, die zum Überführen von aufrecht angeordneten Gegenständen, wie zum Beispiel Spritzen 2, mit einem einen Kragen 3 aufweisenden Körper 4 in Verpackungsmaterial, nämlich eine in der Zeichnung selber nicht dargestellte geformte Folie dient. Die Vorrichtung 1 weist eine Schrägführung mit zwei Leisten 5 auf, deren Abstand kleiner als die Quererstreckung des Kragen 3 und größer als die Quererstreckung des Körpers 4 ist. In Transportrichtung der Spritzen 2 ist den Leisten 5 ein Bogenteil 6 mit zwei Bogenleisten 7 nachgeordnet, die einen im wesentlichen vertikal orientierten Aufnahmespalt und einem im wesentlichen horizontal orientierten Abgabespalt definieren. Der Abstand der beiden Leisten 5 und der Bogenleisten 7 ist einstellbar. Weiterhin ist den Leisten 5 eine Vibrationseinheit 8 zugeordnet, um deren Transport längs der geneigten Leisten 5 zu fördern, wodurch es auch ermöglicht ist, die Neigung der Leisten 5 und die wirkende Hangabtriebskraft gering halten.

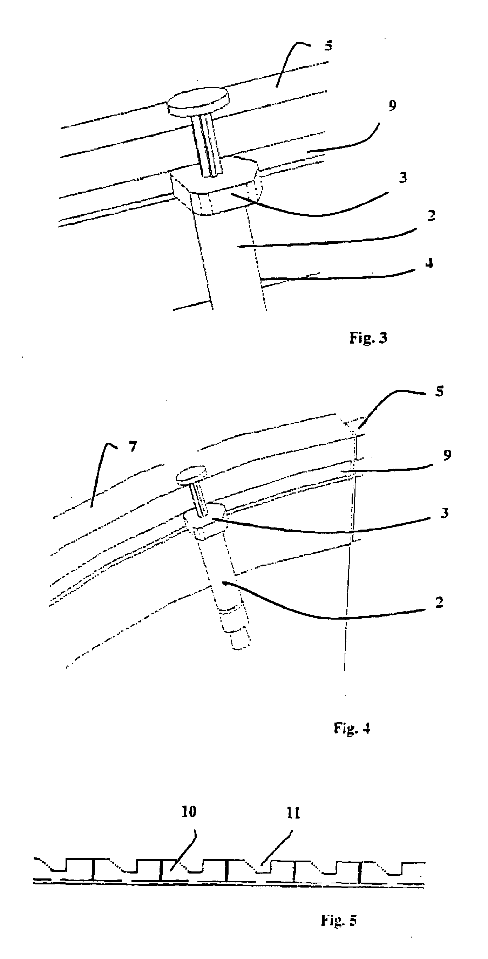

Wie insbesondere in den Figuren 3 und 4 zu erkennen ist, weisen die Leisten 5 und/oder die Bogenleisten 7 auf den einander zugewandten Seiten parallel zur der oberen Leistenkante verlaufende Führungsschlitze 9 auf, in die die Kragen 3 der Körper 4 zur besseren Führung eingeführt werden.

Im einfachsten Fall erfolgt die Übergabe der spritzen 2 aus dem Bogenteil 6 unmittelbar in ein geformtes Folienband. Eine Steigerung der Leistungsfähigkeit ergibt sich aber, wenn die Aufnahme 10 ein umlaufendes Band mit Rastplätzen 11 für die von dem Abgabespalt an die Aufnahme 10 abgegebenen Spritzen 2 umfaßt, wobei die Rastplätze 11 im Querschnitt prismenförmig gestaltet sind zur Realisierung des umlaufenden Bandes als Prismenband.

Dem Band ist ein Handhabungssystem, beispielsweise ein pick-and-place-system, zum Umsetzen der Spritzen 2 in eine geformte Folie zugeordnet.

### Bezugszeichenliste

- 1: Vorrichtung
- 2: Spritze
- 3: Kragen
- 4: Körper
- 5: Leiste
- 6: Bogenteil
- 7: Bogenleiste
- 8: Vibrationseinheit
- 9: Führungsschlitz
- 10: Aufnahme
- 11: Rastplatz

## Patentansprüche

1. Vorrichtung zum Überführen von aufrecht angeordneten spritzen (2), Flaschen oder gleichartigen Gegenständen mit einem einen Kragen (3) aufweisenden Körper (4) in Verpackungsmaterial, insbesondere eine geformte Folie, bei der eine Schrägführung mit zwei Leisten (5) vorgesehen ist, deren Abstand kleiner als die Quererstreckung des Kragens (3) und größer als die Quererstreckung des Körpers (4) ist, wobei in Transportrichtung der Spritzen (2) Flaschen oder dergleichen den Leisten (5) nachgeordnet ein Bogenteil (6) mit zwei Bogenleisten (7) angeordnet ist mit einem im wesentlichen vertikal orientierten Aufnahmespalt und einem im wesentlichen horizontal orientierten Abgabespalt, der über eine Aufnahme (10) mündet, **dadurch gekennzeichnet, daß** die Leisten (5) und/oder die Bogenleisten (7) auf den einander zugewandten Seiten parallel zu der oberen Leistenkante verlaufende Führungsschlitze (9) aufweisen für die Aufnahme der Kragen (3) der Körper (4).

2. Vorrichtung nach Anspruch 1, **dadurch gekennzeichnet, daß** die Aufnahme (10) ein umlaufendes Band mit Rastplätzen (11) für die von dem Abgabespalt an die Aufnahme abgegebenen Gegenstände (2) umfaßt.

3. Vorrichtung nach Anspruch 2, **dadurch gekennzeichnet, daß** die Rastplätze (11) im Querschnitt prismenförmig gestaltet sind zur Realisierung des umlaufenden Bandes als Prismenband.

4. Vorrichtung nach Anspruch 2 oder 3, **dadurch gekennzeichnet, daß** dem Band ein Handhabungssystem zum Umsetzen der Gegenstände (2) in eine geformte Folie zugeordnet ist.

5. Vorrichtung nach Anspruch 1, **dadurch gekennzeichnet, daß** die Aufnahme (10) durch ein geformtes Folienband gebildet ist.

6. vorrichtung nach einem der Ansprüche 1 bis 5, **dadurch gekennzeichnet, daß** den Leisten (5) eine vibrationseinheit (8) zugeordnet ist.

7. Vorrichtung nach einem der Ansprüche 1 bis 6, **dadurch gekennzeichnet, daß** der Abstand der beiden Leisten (5) und der beiden Bogenleisten (7) einstellbar ist.
